# EUROPEAN PATENT APPLICATION

(11) **EP 2 645 667 A1**
(43) Date of publication of application: **02.10.2013**
(21) Application number: 12161554.6
(22) Date of filing: 27.03.2012
(51) Int. Cl.: H04L 29/06, H04W 4/02, H04L 29/08

(54) **Apparatus for updating and transmitting augmented reality data**

(71) Applicant: Alcatel Lucent, 75007 Paris (FR)
(72) Inventor: Marce, Olivier, 91620 NOZAY (FR); Leprovost, Yann, 22304 LANNION (FR)
(74) Representative: Lebkiri, Alexandre

(57) **Abstract**

The present invention relates to a network device (BS) adapted for covering a geographical area, said network device (BS) comprising an augmented reality module (ARDMU) and being integrated into a network (NTW) comprising a central system (CS) which manages augmented reality data (ARD), the augmented reality module (ARDMU) comprising:
- a local storage unit (LSU) adapted for storing augmented reality data (ARD) related to geographical locations covered by the network device (BS), from the central system (CS);
- a storage management module (ARDSMM) adapted for updating augmented reality data (ARD) stored in said local storage unit (LSU);
- a transmission unit (ARDTU) adapted for delivering augmented reality data (ARD) stored in said local storage unit (LSU) to a terminal (UE) connected with the network device (BS).

## Description

### FIELD OF THE INVENTION

The present invention relates generally to communication systems, and particularly to an apparatus for updating and transmitting augmented reality data.

### BACKGROUND

Augmented Reality (AR) deals with real world environment, whose elements are "augmented" with computer generated data, called Augmented Reality Data (ARD). Augmentation is conventionally in real-time and in context with environmental environment. For example information related to a shop is automatically added to a video capture scene in which the shop is shooting. For these reasons, access to ARD has to be fast and efficient.

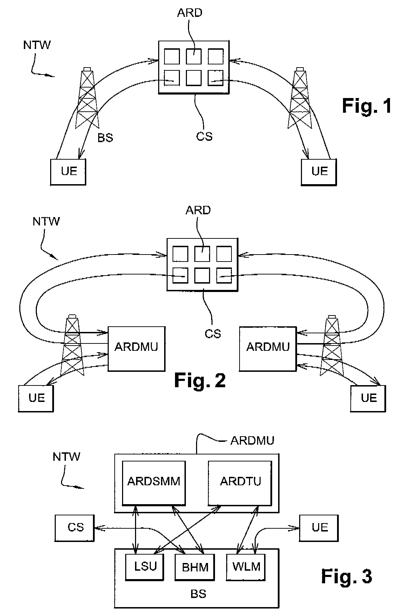

Traditionally, ARD are stored in a central system CS of a network NTW, as represented in figure 1. When a terminal UE, connected with a base station BS of the network NTW, sends requests for ARD to the central system CS, the central system CS identifies and transmits the relevant ARD to the terminal UE. Relevant ARD is identified thanks to the geographical location of the terminal UE.

This configuration brings disadvantages: ARD are stored in a central system CS which is unrelated to the geographical location of the terminal (UE). So ARD are transmitted across the network NTW whereas they are needed and useful at only one place of this network NTW.

### SUMMARY

It is an object of the invention to reduce the needed bandwidth for ARD transmission, and to improve the delivery speed.

To this end, the invention provides a network device adapted for serving a geographical area, said network device comprising an augmented reality module and being integrated into a network comprising a central system which manages augmented reality data, the augmented reality module comprising:
- a local storage unit adapted for storing augmented reality data ARD related to geographical locations covered by the network device, from the central system;
- a storage management module adapted for updating augmented reality data stored in said local storage unit;
- a transmission unit adapted for delivering augmented reality data stored in said local storage unit to a terminal connected with the network device.

ARD are data used by terminals to be added on real environments captured by these terminals. It is to be noted that ARD needed by a terminal are related to the terminal geographical location.

In this invention, ARD needed by the terminal, that is to say ARD related to its geographical location, are available from a location the user equipment is physically close to. As a consequence, bandwidth is saved and the ARD delivery is improved.

The network device according to the invention may also present one or more of the characteristics below, considered individually or according to all technically possible combinations:
- said network device comprises a backhaul module, said storage management module being adapted for interacting with the central system via said backhaul module in order to update augmented reality data;
- said network device comprises a wireless module, said transmission unit being adapted for interacting with a terminal connected with the network device via said wireless module in order to receive augmented reality data requests from the terminal and to transmit augmented reality data to the terminal;
- said transmission unit is adapted for analyzing augmented reality data requests from the terminal;
- said storage management module is adapted for carrying out updates during non-busy hours of the network device;
- said storage management module is adapted for carrying out updates periodically;
- said storage management module is adapted for carrying out updates on demand;
- said network device is a Femto Base Station.

In addition, there is provided an augmented reality module included in a network device according to the invention, comprising:
- a storage management module adapted for updating augmented reality data stored in the local storage unit of the network device;
- a transmission unit adapted for delivering augmented reality data stored in the local storage unit of the network device to a terminal connected with the network device.

In addition, there is provided a network comprising at least a network device according to the invention.

Besides, there is provided a method for transmitting augmented reality data to a terminal connected with a network device according to the invention, said method comprising:
- reception by the network device of a request for augmented reality data from the terminal;
- selection of augmented reality data related to the geographical location of the terminal, in the local storage unit;
- transmission by the network device of said selected augmented reality data to the terminal;
- updating augmented reality data related to locations covered by the network device, from the central system.

### BRIEF DESCRIPTION OF THE DRAWINGS

Some embodiments of apparatus and/or methods in accordance with embodiments of the present invention are now described, by way of example only, and with reference to the accompanying drawings, in which:
- figure 1 schematically illustrates Augmented Reality exchanges in accordance with the state of the art;
- figure 2 schematically illustrates a network including an Augmented Reality base station allowing exchanges in accordance with the present invention;
- figure 3 schematically illustrates a not limited embodiment of a base station according to the invention used within exchanges of figure 2.

### DESCRIPTION OF EMBODIMENTS

In the following description, well-known functions or constructions by the man skilled in the art are not described in detail since they would obscure the invention in unnecessary detail.

As illustrated on figure 2, the present invention relates to a network device BS adapted for serving a geographical area, said network device BS being part of a communication network NTW.

In this embodiment, the network device BS is a base station, but in other embodiments, it is a DSLAM, a router, or any other device able to serve at least one geographical area.

The network NTW comprises a central system CS which manages augmented reality data (ARD). As previously explained, ARD are used by terminals adapted for augmented reality, to be added on real environments captured by these terminals. It is to be noted that ARD needed by a terminal are related to the terminal geographical location.

As represented on figure 3, the base station BS according to the invention comprises:
- a local storage unit LSU, being adapted for storing ARD;
- a backhaul module BHM, being adapted for interacting with the central system CS;
- a wireless module WLM being adapted for communicate with a terminal UE connected with the base station BS.

In addition, the base station BS comprises an augmented reality module ARDMU. The augmented reality module ARDMU comprises:
- a storage management module ARDSMM, adapted for interacting with the local storage unit LSU and the backhaul module BHM;
- a transmission unit ARDTU, adapted for interacting with the local storage unit LSU and the wireless module WLM.

The storage management module ARDSMM is used for regularly updating ARD related to locations covered by the base station BS, from the central system CS via the backhaul module BHM. These ARD are stored in the local storage unit LSU.

As for the transmission unit ARDTU, it is used for transmitting augmented reality data ARD from the local storage unit LSU to terminals UE connected with the base station BS, via the wireless module WLM.

With this base station BS comprising an augmented reality module ARDMU as described, when the terminal UE needs ARD, the request for ARD is not transmitted as far as the central system CS: they are managed by the augmented reality module ARDMU. In addition, ARD are not transmitted across the network NTW from the central system CS to the terminal UE, but from the base station BS to the terminal UE. As a consequence, bandwidth is saved and the ARN delivery is faster.

In a not limited embodiment, the transmission unit ARDTU acts as a proxy for delivering ARD to terminals UE, but in another not limited embodiment, the transmission unit ARDTU can inspects requests from terminals UE and provide them ARD by itself. For example, the transmission unit ARDTU is accessible through a dedicated protocol.

In not limited embodiments, updates from the central system CS are periodically realized, and/or on demand, and/or on timeout, and/or are controlled by the network NTW operator or a subscription system. Moreover, updates are favorably realized when the traffic handled by the base station is low, for example on non busy hours.

The local repository of ARD is updated depending on a policy that includes expiry date of the local ARD, and resources availability (mainly on links between the base station BS and the central system CS).

It is to be noted that this invention is particularly adapted for femto base stations, which are adapted for covering indoor residences (the average coverage radius is fifty meters).

## Claims

1. A network device (BS) adapted for serving a geographical area, said network device (BS) comprising an augmented reality module (ARDMU) and being integrated into a network (NTW) comprising a central system (CS) which manages augmented reality data (ARD), the augmented reality module (ARDMU) comprising:
- a local storage unit (LSU) adapted for storing augmented reality data (ARD) related to geographical locations covered by the network device (BS), from the central system (CS);
- a storage management module (ARDSMM) adapted for updating augmented reality data (ARD) stored in said local storage unit (LSU);
- a transmission unit (ARDTU) adapted for delivering augmented reality data (ARD) stored in said local storage unit (LSU) to a terminal (UE) connected with the network device (BS).

2. A network device (BS) according to the previous claim, wherein said network device comprises a backhaul module (BHM), said storage management module (ARDSMM) being adapted for interacting with the central system (CS) via said backhaul module (BHM) in order to update augmented reality data (ARD).

3. A network device (BS) according to any of the previous claims, wherein said network device (BS) comprises a wireless module (WLM), said transmission unit (ARDTU) being adapted for interacting with a terminal (UE) connected with the network device (BS) via said wireless module (WLM) in order to receive augmented reality data (ARD) requests from the terminal (UE) and to transmit augmented reality data (ARD) to the terminal (UE).

4. A network device (BS) according to any of the previous claims, wherein said transmission unit (ARDTU) is adapted for analyzing augmented reality data requests from the terminal (UE).

5. A network device (BS) according to any of the previous claims, wherein said storage management module (ARDSMM) is adapted for carrying out updates during non busy hours of the network device (BS).

6. A network device (BS) according to any of the previous claims, wherein said storage management module (ARDSMM) is adapted for carrying out updates periodically.

7. A network device (BS) according to any of the previous claims, wherein the storage management module (ARDSMM) is adapted for carrying out updates on demand.

8. A network device (BS) according to any of previous claims, wherein said network device is a Femto Base Station.

9. An augmented reality module (ARDMU), included in a network device (BS) according to any of the previous claims, comprising:
- a storage management module (ARDSMM) adapted for updating augmented reality data (ARD) stored in the local storage unit (LSU) of the network device (BS);
- a transmission unit (ARDTU) adapted for delivering augmented reality data (ARD) stored in the local storage unit (LSU) of the network device (BS) to a terminal (UE) connected with the network device (BS).

10. Network (NTW) comprising at least one network device (BS) according to any of the claims 1 to 8.

11. Method for transmitting augmented reality data (ARD) to a terminal (UE) connected with a network device (BS) according to any of the claims 1 to 8, said method comprising:
- reception by the network device (BS) of a request for augmented reality data (ARD) from the terminal (UE) ;
- selection of augmented reality data (ARD) related to the geographical location of the terminal (UE), in the local storage unit (LSU);
- transmission by the network device (BS) of said selected augmented reality data (ARD) to the terminal (UE);
- updating augmented reality data (ARD) related to locations covered by the network device (BS), from the central system (CS).
